**Europäisches Patentamt**

**European Patent Office**

**Office européen des brevets**

(11) Veröffentlichungsnummer: **0 157 890**

**A1**

(12) **EUROPÄISCHE PATENTANMELDUNG**

(21) Anmeldenummer: **84103914.2**

(22) Anmeldetag: **07.04.84**

(51) Int. Cl.⁴: **B 23 B 31/04**

(43) Veröffentlichungstag der Anmeldung:
**16.10.85 Patentblatt 85/42**

(84) Benannte Vertragsstaaten:
**AT CH DE FR GB IT LI SE**

(71) Anmelder: **Cad-Engineering Rupperswil AG
Höhenweg 1031
CH-5102 Rupperswil(CH)**

(72) Erfinder: **Hübscher, Hans Rudolf
Höhenweg 24
CH-5102 Rupperswil(CH)**

(74) Vertreter: **Meyer, Reinhard, Dipl.-Ing.
c/o Dr. A. R. Egli & Co. Patentanwälte Horneggstrasse 4
CH-8008 Zürich(CH)**

(54) **Schneidwerkzeug aus einem Schneidkopf und einem mit diesem verbundenen Aufnahmeschaft.**

(57) Das Schneidwerkzeug setzt sich aus einem Schneidkopf (1) und einem Aufnahmeschaft (11) zusammen, wobei für die Uebertragung des am Schneidkopf (1) eingeleiteten Drehmomentes bei der Bearbeitung in einer Ausnehmung (21) der Auflagefläche (18) Flächen (22) vorgesehen sind, an die Anschlagflächen (17) des Schneidkopfes (1) anliegen. Eine feste Verbindung zwischen dem Schneidkopf (1) und dem Aufnahmeschaft (11) wird durch einen in eine Gewindebohrung (33) des Aufnahmeschaftes (11) eingeschraubten Gewindestift (31) erreicht, der in eine konische Sacklochbohrung (10) des Schneidkopfes (1) ragt. Da das Drehmoment im Bereich der Auflagefläche (18) übertragen wird, ist der Gewindestift (31) nur soweit belastet, dass eine spielfreie Verbindung zwischen dem Schneidkopf (1) und dem Aufnahmeschaft (11) besteht.

Fig. 1  Fig. 2  Fig. 3

EP 0 157 890 A1

0157890

Schneidwerkzeug aus einem Schneidkopf und einem mit
diesem verbundenen Aufnahmeschaft

---

Die Erfindung betrifft ein Schneidwerkzeug, das aus einem
Schneidkopf und einem mit diesem fest verbundenen Aufnahmeschaft zusammengesetzt ist, wobei der Schneidkopf eine
auf einer Auflagefläche des Aufnahmeschaftes aufliegende
Stützfläche aufweist, wobei sowohl die Stützfläche des
Schneidkopfes als auch die Auflagefläche des Aufnahmeschaftes als senkrecht zur Werkzeugachse verlaufende
Flächen ausgebildet sind.

Schneidwerkzeuge, die zweiteilig ausgebildet sind und
einen Schneidkopf und einen mit diesem fest verbundenen
Aufnahmeschaft aufweisen sind allgemein bekannte Werkzeuge der spanenden Bearbeitung. Der Vorteil einer
zweiteiligen Ausführung liegt darin, dass der Aufnahmeschaft je nach der verwendeten Werkzeugmaschine verschieden ausgebildet sein muss, während der Schneidkopf selbst für eine bestimmte spanende Operation immer
derselbe ist. Durch die Zweiteiligkeit des Schneidwerkzeuges lässt sich dadurch eine leichte Anpassung,
z.B. an eine Werkzeugmaschinenspindel oder an ein
Futter, leicht durchführen, wobei jedoch der Schneidkopf nicht gewechselt zu werden braucht. Damit aber die
Genauigkeit des Schneidwerkzeugs gewahrt wird, ist es erforderlich, dass die beiden Teile, d.h. der Schneidkopf und der Aufnahmeschaft, genau zentrisch miteinander
verbunden sind.

Bei einer bekannten Ausführungsform eines Schneidwerkzeuges (CH-PS 537 770) wird das genaue Zusammenpassen
der beiden Teile dadurch erreicht, dass der Schneidkopf
und der Aufnahmeschaft mittels eines an der der Schneide
abgewandten Seite des Schneidkopfes angeordneten zylinderförmigen Zapfens und einer entsprechenden schneidkopfseitig angeordneten entsprechenden zylindrischen
Bohrung am Aufnahmeschaft zusammengesteckt werden. Der
Zapfen und die Bohrung können zwar sehr genau hergestellt werden, doch ist nachteilig, dass an der Verbindungsstelle dieser beiden Teile, die durch eine in den
Aufnahmeschaft radial eingeschraubte Madenschraube gebildet wird, deren Ende konisch angeformt ist und in
eine entsprechende Bohrung im Zapfen des Schneidkopfes
eingreift, auch das bei der Bearbeitung auftretende
Drehmoment übertragen werden muss. Da dieses Drehmoment
je nach dem zu bearbeitenden Material recht gross werden kann, können an der Verbindungsstelle nicht nur
elastische, sondern auch plastische Verformungen eintreten, die dann auch das genaue Fluchten des Schneidkopfes im Aufnahmeschaft ungünstig beeinflussen können.

Hier setzt die Erfindung ein, der die Aufgabe zugrundeliegt, ein Schneidwerkzeug der eingangs beschriebenen
Art so auszugestalten, dass an der Verbindungsstelle
eine oder nur geringe Kräfte übertragen werden müssen,
so dass an dieser Stelle nur geringe elastische und
keine plastische Verformungen auftreten.

Diese Aufgabe wird gemäss der Erfindung dadurch gelöst, dass die feste Verbindung zwischen dem Schneidkopf und dem Aufnahmeschaft durch in der Auflagefläche eingebettete Mitnahme- und Befestigungsmittel gebildet ist.

Die Erfindung ist in der Zeichnung in einem Ausführungsbeispiel dargestellt und nachfolgend beschrieben. Es zeigen:

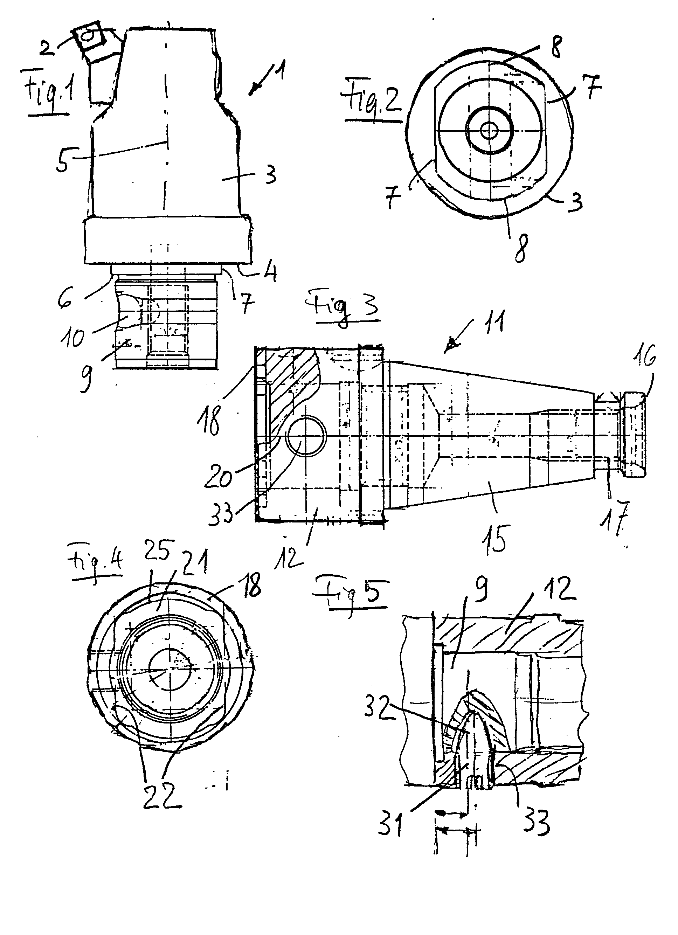

Fig. 1     eine Ansicht eines Schneidkopfes zum Innendrehen,

Fig. 2     eine Ansicht des Drehwerkzeuges nach Fig. 1 aus Richtung II,

Fig. 3     eine Seitenansicht eines Aufnahmeschaftes für die Aufnahme des Schneidkopfes nach Fig. 1,

Fig. 4     eine Ansicht des Aufnahmeschaftes aus Richtung IV und

Fig. 5     einen Teilschnitt der Verbindungsstelle zwischen Schneidkopf und Aufnahmeschaft.

Der in Fig. 1 dargestellte Schneidkopf 1 weist eine Schneide 2 auf, mit der beipielsweise Bohrungen ausgedreht werden können. Die Ausbildung der Schneide 2 und deren Lagerung im Schneidkopf 1 ist für die vorliegende Erfindung ohne Bedeutung und wird deshalb nicht näher beschrieben. Es können in Verbindung mit der Erfindung Schneidköpfe mit ein, zwei oder mehr Schneiden und für verschiedene Bearbeitungsoperationen verwendet werden.

0157890

Der Schneidkopf 1 weist einen kreiszylindrischen Körper 3 auf, an dem auf der der Schneide 2 abgewandten Seite eine Stützfläche 4 angeordnet ist, die senkrecht zur Achse 5 des Schneidkopfes 1 verläuft. Auf der Stützfläche 4 ragt eine Schulter 6 ab, deren Umfangsfläche aus zwei symmetrisch zur Schneidkopfachse 5 angeordneten parallelen Anschlagflächen 7 und zwei diametral gegenüberliegenden kreisbogenförmigen Teilflächen 8 zusammengesetzt ist.

An die Schulter 6 schliesst ein zur Achse 5 koaxialer Befestigungszapfen 9 an, der eine radial verlaufende, vom Umfang des Befestigungszapfens 9 zur Achse 5 gerichtete, sich konisch verengende Sacklochbohrung aufweist, die einen Teil der Verbindung zwischen dem Schneidkopf 1 und einem Aufnahmeschaft 11 bildet, siehe Fig. 3.

Der in Fig. 3 dargestellte Aufnahmeschaft 11 weist eine zylindrische Schaftpartie 12 und eine konische Schaftpartie 15 auf, die an ihrem freien Ende 16 ein Innengewinde 17 aufweist, mit der der Aufnahmeschaft 11 in die Spindel einer Werkzeugmaschine eingespannt werden kann. Die konische Schaftpartie 15 kann auch in anderer Weise ausgebildet sein. Anstelle des Konus kann z.B. auch eine kreiszylindrische Partie mit daran anschliessendem Aussengewinde vorgesehen werden.

Auf der schneidkopfseitigen Seite des Aufnahmeschaftes 11 ist eine Aufnahmefläche 18 angeordnet, die senkrecht zur Achse 20 des Aufnahmeschaftes 11 verläuft. In die Aufnahmefläche 18 ist eine Ausnehmung 21 eingearbeitet. Die Ausnehmung 21 weist eine der Umfangsfläche der Schulter 6 angepasste Form auf, d.h. parallele, symmetrisch zur Achse 20 verlaufende Flächen 22, die den
Anschlagflächen 7 des Schneidkopfes 1 entsprechen, und
gegenüberliegende, symmetrisch zur Achse 20 angeordnete
kreisbogenförmige Teilflächen 25, die den kreisbogenförmigen Teilflächen 8 des Schneidkopfes 1 entsprechen. Die
Ausnehmung 21 liegt in einer Ebene 26, die gegenüber der
Aufnahmefläche 18 etwas, z.B. 0,5 mm, zurückgesetzt ist.
Die Anschlagflächen 7 des Schneidkopfes 1 liegen an den
Flächen 22 der Ausnehmung 21 an und stützen an diesen das
auf den Schneidkopf 1 beim Bearbeiten einwirkende Drehmoment ab. Durch die etwas tiefer angeordnete Ebene 26 wird
erreicht, dass selbst bei kleiner örtlicher plastischer
Verformung die Aufnahmefläche 18 nicht beeinträchtigt wird.
Im Hinblick auf die symmetrisch zur Achse 20 angeordneten
Flächen 22 zur Abstützung der Anschlagflächen 7 ist jedoch
mit plastischen Verformungen an dieser Stelle praktisch
nicht zu rechnen.

Das genaue Ausrichten des Schneidkopfes 1 mit dem Aufnahmeschaft 11 wird jedoch nicht durch die Flächen 22
oder die Teilflächen 25 der Ausnehmung 21 erreicht, sondern durch die zylinderförmige Bohrung 30. Dadurch wird
ein genaues Fluchten der beiden Achsen 5, 20 erreicht.

Zur Verbindung des Schneidkopfes 1 mit dem Aufnahmeschaft
11 ist ein Gewindestift 31 mit einem konisch angespitzten Ende 32 in eine Gewindebohrung 33 eingeschraubt,
wobei das konische Ende 32 in die konische Sacklochbohrung 10 im Befestigungszapfen 9 des Schneidkopfes 1 ragt.
Da der Abstand der Achse der Gewindebohrung 33 zur Aufnahmefläche 18 etwas grösser ist als der Abstand der Achse
der Sacklochbohrung 10 zur Stützfläche 4, legt sich
der eingeschraubte Gewindestift 31 mit seinem konischen
Ende an die konische Sacklochbohrung 10 an, derart, dass die Stützfläche 4 des Schneidkopfes 1 satt gegen die Aufnahmefläche 18 des Aufnahmeschaftes 11 gepresst wird. Da die Anschlagflächen 7 der Schulter 6 des Schneidkopfes 1 etwas Spiel gegenüber den Flächen 22 der Ausnehmung 21 aufweisen, tritt bei der Uebertragung eines Drehmomentes eine geringe Verdrehung des Schneidkopfes 1 gegenüber dem Aufnahmeschaft 11 auf, wodurch der Gewindestift 31 stärker gegen die Sacklochbohrung 10 des Schneidkopfes 1 gepresst wird. Auf diese Weise wird die Verbindung zwischen dem Schneidkopf 1 und dem Aufnahmeschaft 11 mit einer Vorspannung gewährleistet, durch die diese Verbindung auch beim Angreifen von Schneidkräften völlig spielfrei bleibt.

In den Figuren ist die Verbindung zwischen dem Schneidkopf 1 und dem Aufnahmeschaft 11 mit einem Gewindestift 31 ausgeführt. Es können jedoch auch ein zweiter und, bei grösseren Durchmessern des Befestigungszapfens 9, mehrere Gewindestifte 31 verwendet werden. Die Anordnung des Gewindestiftes bzw. der Gewindestifte 31 kann in beliebiger Weise zur Lage der Schneiden des Schneidkopfes 1 gewählt werden, da die Drehmomentübertragung nicht durch den Gewindestift bzw. die Gewindestifte 31 erfolgt, sondern durch die Anschlagflächen 7 des Schneidkopfes 1 und die Flächen 22 der Ausnehmung 21 im Aufnahmeschaft 11. In dem beschriebenen Schneidwerkzeug sind zwei Anschlagflächen 7 am Schneidkopf 1 und entsprechende Flächen 22 in der Ausnehmung 21 des Aufnahmeschaftes 11 vorgesehen. Es könnten jedoch auch mehr als zwei Anschlagflächen 7 und entsprechende Flächen 22 vorgesehen werden, die beispielweise polygonartig an der Schulter 6 des Schneidkopfes 1, bzw. in der Ausnehmung 21 des Aufnahmeschaftes 11 angeordnet sein können.

Patentansprüche

1. Schneidwerkzeug, das aus einem Schneidkopf (1) und einem mit diesem fest verbundenen Aufnahmeschaft (11) zusammengesetzt ist, wobei der Schneidkopf eine auf einer Auflagefläche (18) des Aufnahmeschaftes aufliegende Stützfläche (4) aufweist und sowohl die Stützfläche als auch die Auflagefläche als senkrecht zur Werkzeugachse (5, 20) verlaufende Flächen ausgebildet sind, dadurch gekennzeichnet, dass die feste Verbindung zwischen dem Schneidkopf (1) und dem Aufnahmeschaft (11) durch in der Auflagefläche (18) eingebettete Mitnahme- und Befestigungsmittel (7, 22; 9, 10, 31, 32, 33) gebildet ist.

2. Schneidwerkzeug nach Anspruch 1, dadurch gekennzeichnet, dass die Mitnahmemittel an dem Schneidkopf (1) angeordnete, von der Stützfläche (4) abstehende Anschlagflächen (7) sind, die an entsprechenden Flächen (22) in einer Ausnehmung (21) des Aufnahmeschaftes (11) anliegen.

3. Schneidwerkzeug nach Anspruch 2, dadurch gekennzeichnet, dass die Anschlagflächen (7) Teilflächen der Umfangsfläche einer Schulter (6) bilden, zwischen denen kreisbogenförmige Teilflächen (8) zentrisch zur Achse (5) des Schneidkopfes (1) angeordnet sind, die in zentrische Teilflächen (25) der Innenumfangsfläche der Ausnehmung (21) passen.

4. Schneidwerkzeug nach Anspruch 2 oder 3, dadurch gekennzeichnet, dass die Flächen (22) und die kreisbogenförmigen Teilflächen (25) der Ausnehmung (21) zur Auflagefläche (18) des Aufnahmeschaftes (11) zurückgesetzt sind.

5. Schneidwerkzeug nach Anspruch 1, dadurch gekennzeichnet, dass als Befestigungsmittel ein von der Schulter (6) des Schneidkopfes (1) abstehender, kreiszylindrischer Befestigungszapfen (9) vorgesehen ist, der satt passend in eine kreiszylindrische, zentrisch zur Achse (20) angeordnete Bohrung (30) des Aufnahmeschaftes (11) ragt und mit mindestens einer radial verlaufenden, vom Zapfenumfang zur Achse (5) des Schneidkopfes (1) gerichteten, sich konisch verengenden Sacklochbohrung (10) versehen ist, in die ein in eine radiale Gewindebohrung (33) des Aufnahmeschaftes (11) eingeschraubter Gewindestift (31) mit einem konischen Stiftende (32) ragt.

0157890
Be 20 837/My

Fig.1

2

1

5

3

6

10

9

7

4

Fig.2

8

7

7

3

8

Fig.3

11

16

18

20

33

12

15

17

Fig.4

25 21

18

22

Fig.5

9 12

32

31 33

))) Europäisches
Patentamt

**EUROPÄISCHER RECHERCHENBERICHT**

**0157890**
Nummer der Anmeldung

EP 84 10 3914

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 024 032 (NIXON) <br> * Spalte 3, Zeilen 73-75; Spalte 4, Zeilen 1-35; Figuren 3-6 * | 1,5 | B 23 B 31/04 |
| X | US-A-2 611 621 (PATTERSON) <br> * Spalte 3, Zeilen 1-8; Figuren 1,4 * | 2-4 | |
| A | DE-C- 935 865 (STIHL) | | |
| A | CH-A- 553 022 (SCHÄUBLIN) | | |
| A | DE-B-1 155 304 (BÜCHLI) | | |
| A | FR-A-1 589 324 (PUECH) | | RECHERCHIERTE SACHGEBIETE (Int. Cl.4) <br> B 23 B 31/00 |
| A | US-A-3 679 220 (REEVES) | | |
| A | US-A-1 839 316 (JACOBS) | | |

Der vorliegende Recherchenbericht wurde für alle Patentansprüche erstellt.

| Recherchenort | Abschlußdatum der Recherche | Prüfer |
|---|---|---|
| DEN HAAG | 14-12-1984 | BOGAERT F.L. |